Europäisches Patentamt

European Patent Office

Office européen des brevets

(19)

(11) Numéro de publication: **0 100 273**
**B1**

(12) **FASCICULE DE BREVET EUROPEEN**

(45) Date de publication du fascicule du brevet:
23.04.86

(21) Numéro de dépôt: **83401477.1**

(22) Date de dépôt: **19.07.83**

(51) Int. Cl.⁴: **F 16 D 55/224**

(54) **Ressort de patins de frein à disque à étrier coulissant et frein à disque équipé d'un tel ressort.**

(30) Priorité: **22.07.82 FR 8212805**

(43) Date de publication de la demande:
**08.02.84 Bulletin 84/6**

(45) Mention de la délivrance du brevet:
**23.04.86 Bulletin 86/17**

(84) Etats contractants désignés:
**DE GB IT SE**

(56) Documents cités:
**EP - A - 0 002 399**
**EP - A - 0 036 368**
**EP - A - 0 059 128**
**DE - A - 2 345 733**
**FR - A - 2 009 993**
**FR - A - 2 199 828**
**FR - A - 2 221 028**
**FR - A - 2 479 381**
**GB - A - 2 056 601**
**US - A - 4 061 209**

(73) Titulaire: **BENDIX France, 126, rue de Stalingrad, F-93700 Drancy (FR)**

(72) Inventeur: **Escarabajal, Ghislain, 4 sente de la Loge Chauconin Neufmontiers, F-77100 Meaux (FR)**
Inventeur: **Maligne, Jean-Charles, 18 rue du Colonel Fabien, F-93300 Aubervilliers (FR)**

(74) Mandataire: *Le Moenner, Gabriel et al*, **SERVICE BREVETS BENDIX 44, Rue François 1er, F-75008 Paris (FR)**

**Description**

L'invention concerne les ressorts de patins de frein à disque, et plus particulièrement, un ressort de patins pour frein à disque du type comportant un étrier monté coulissant sur un support fixe et comprenant une partie de voûte présentant, à l'aplomb de deux patins de friction du frein, une ouverture traversante, le ressort étant destiné à être interposé entre la partie de voûte de l'étrier et les patins de friction pour exercer sur ces derniers au moins un effort radial dirigé sensiblement vers l'axe du disque pour solliciter les patins de friction contre des surfaces d'appui pratiquées dans l'élément du frein (support fixe ou étrier) recevant en ancrage ces patins.

De façon plus spécifique, la présente invention concerne un tel ressort de patins comportant une partie centrale, agencée pour être reçue dans l'ouverture de la voûte de l'étrier, prolongée par des parties latérales susceptibles de coopérer avec la face intérieure de la voûte pour le montage élastique du ressort sur l'étrier, ainsi qu'une partie d'appui coopérant, en position de fonctionnement du frein, avec les bords supérieurs des patins de friction.

Un tel ressort est décrit dans la demande de Brevet Allemand 2 345 733. Le ressort de ce document, réalisé à partir d'une lame métallique élastique, comporte une âme centrale à partir de laquelle font saillie de courtes pattes de montage dans l'ouverture traversante de la voûte d'étrier, ainsi que des paires de pattes allongées, orthogonales aux précédentes, s'étendant le long de la face intérieure de la voûte pour maintenir élastiquement le ressort sur l'étrier. En position de fonctionnement, l'âme centrale du ressort vient contre le bord supérieur des patins en déformant les paires de pattes alongées qui assurent la force de sollicitation des patins. Un ressort de ce type et de conception relativement encombrante, nécessite l'aménagement d'un logement important dans la face intérieure de la voûte de l'étrier pour recevoir les paires de pattes correspondantes, ainsi qu'un évidement de l'âme centrale pour permettre un contrôle visuel des patins et une meilleure évacuation de la chaleur dégagée lors des opérations de freinage.

La demande de Brevet Français 2 479 381 décrit une structure de ressort simplifiée en fil d'acier conformée en forme de Z prenant appui dans un dégagement formé dans la face intérieure de la voûte de l'étrier.

La présente invention a pour objet de proposer un ressort de patins de frein du type susmentionné, de structure simple, de faible coût de fabrication, n'occupant qu'un faible espace entre la voûte et les patins de friction et permettant d'assurer une force de sollicitation radiale importante sur ces derniers.

Pour ce faire, selon une caractéristique de l'invention, le ressort est conformé pour présenter deux arceaux parallèles sensiblement en forme de C constituant la partie centrale du ressort, les extrémités de chaque arceau se prolongeant par des première et seconde pattes repliées angulairement dans une même direction par rapport au plan de l'arceau, les pattes des deux arceaux s'étendant dans des directions opposées et constituant lesdites parties latérales du ressort, les premières pattes des arceaux étant reliées l'une à l'autre par un brin de liaison s'étendant perpendiculairement aux plans des arceaux et constituant la partie d'appui du ressort venant en contact d'engagement avec les bords supérieurs des patins de friction.

Dans les types de freins à disque susmentionnées, notamment dans les freins à disque dont l'étrier est monté coulissant par rapport au support fixe au moyen d'une colonnette axiale unique et au moyen de deux surfaces de coulissement formées en vis-à-vis dans l'extrémité de l'étrier opposée à la colonnette et sur le support fixe, il est souhaitable d'appliquer sur les patins de friction un effort tangentiel permanent sollicitant ces derniers en appui contre l'élément (étrier ou support fixe) par rapport auquel ils sont reçus en ancrage et en coulissement axial.

Le Brevet Français 2 009 993 décrit un ressort unique prévu à cet effet monté sur au moins une des tiges axiales de guidage des patins dans un frein à étrier plat.

Le Brevet Britannique 2 056 601 décrit un ressort à lame comprenant un âme centrale profilée et quatre bras latéraux élastiques assurant le maintien élastique du ressort dans une cavité fermée de la voûte de l'étrier, l'âme centrale portant, en condition d'utilisation, contre le bord supérieur des patins et un bord latéral d'une saillie de ces mêmes patins.

Le document EP-A-59 128 [publié 1.9.82, représentant un état de la technique selon Art. 54(3) CBE] décrit, quant à elle, un ressort à lame monté dans l'ouverture traversante de la voûte d'étrier et comportant deux parties en V s'arc-boutant sur une des faces de l'ouverture et sur la face intérieure de la voûte d'étrier, le sommet du V portant en appui contre un angle formé par une partie en saillie du bord supérieur des patins de friction.

La présente invention a pour autre objet de proposer un ressort du type défini plus avant, de conception simple et robuste et de faible encombrement, permettant d'assurer en outre, l'application sur les patins de friction d'un effort tangentiel permanent.

Pour ce faire, selon une caractéristique de l'invention, le brin de liaison est relié à l'extrémité extérieure de chaque première patte par une boucle, le brin de liaison étant décalé vers les secondes pattes par rapport au premières pattes.

De cette façon, lors de la mise en place de l'étrier, le brin d'appui, portant contre le bord supérieur des patins, est forcé angulairement dans la direction vers les arceaux en venant prendre appui dans un angle défini sur le bord supérieur des patins par une saillie centrale de ces derniers pour solliciter ainsi élastiquement les patins à la fois radialement et tangentiellement.

La présente invention a encore pour objet de proposer un frein à disque du type mentionné ci-dessus agencé pour être équipé d'un ressort de patin selon l'invention et permettant la mise en place de l'extérieur du ressort sur l'étrier.

A cet effet, selon une autre caractéristique de l'invention, l'ouverture traversante de la voûte de l'étrier présente, en vue du dessus, un passage de dimensions réduits à profil sensiblement rectangulaire avec deux lumières d'extrémités opposées pour le passage des premières et secondes pattes des deux arceaux délimitant intérieurement des surfaces d'appui latérales formées dans la face intérieure de la voûte de l'étrier.

D'autres caractéristiques et avantages de la présente invention ressortiront de la description suivante de modes de réalisation, donnés à titre illustratif mais nullement limitatif, faite en relation avec les dessins annexés, sur lesquels:

les figures 1 à 3 sont des vues différentes d'un ressort selon l'linvention;

la figure 4 est une vue du dessus d'un frein selon l'invention équipé d'un ressort selon les figures 1 à 3;

la figure 5 est une vue en coupe suivant la ligne V-V de la figure 4; et

la figure 6 est une vue, partiellement en coupe, d'un autre type de frein à disque selon l'invention équipé du ressort des figures 1 à 3.

Sur les figures et dans la description qui va suivre, les éléments identiques ou analogues sont repérés par les mêmes chiffres références.

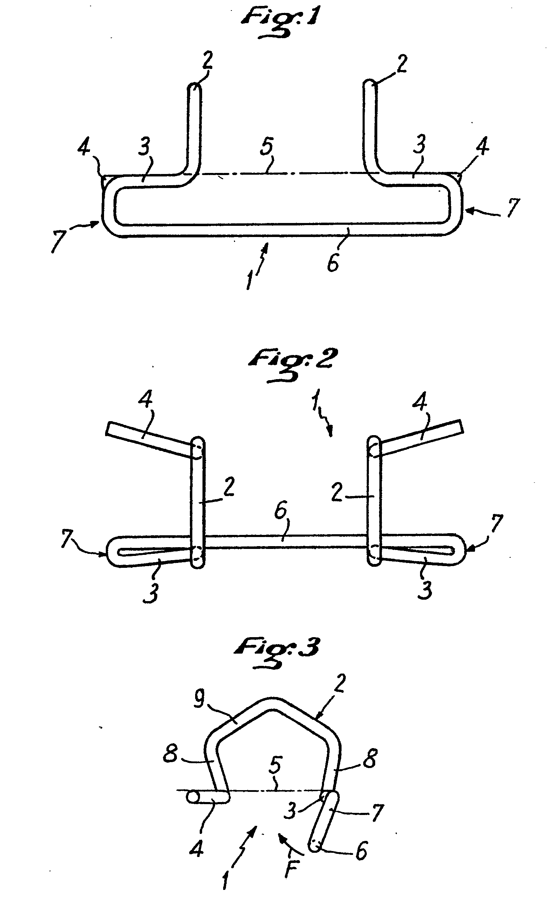

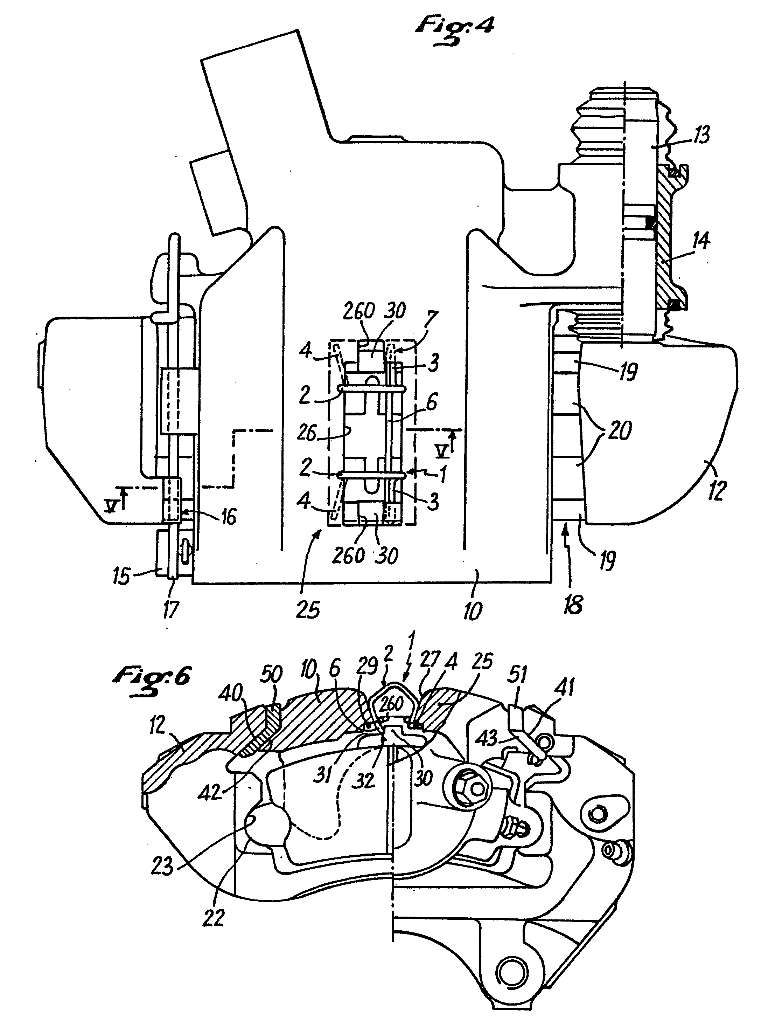

Comme représenté sur les figures, le ressort 1 selon l'invention, réalisé à partir d'un fil d'acier à ressort, avantageusement inoxydable, d'un diamètre par exemple de 1,5 mm, comporte une partie centrale de montage constituée de deux arceaux 2 identiques, en forme générale de C, les extrémités de chaque arceau étant prolongées respectivement par des premières pattes 3 et des secondes pattes 4, les pattes de chaque arceau s'étendant dans la même direction, à l'opposé de l'autre arceau. Comme on le voit sur la figure 3, les différentes pattes ont des génératrices supérieures sensiblement coplanaires dans un plan de contact 5. Les premières pattes 3 s'étendent sensiblement perpendiculairement aux plans des arceaux 2 tandis que les secondes branches 4 s'étendent suivant un angle écartant l'extrémité de ces secondes branches des premières branches adjacentes, au-delà de l'extension maximale latérale des moitiés d'arceaux correspondantes. L'extension vers l'extérieur des premières et secondes branches est sensiblement identique, comme on le voit sur les figures 1 et 2. Les extrémités extérieures des premières branches 3 sont reliées l'une à l'autre par un brin de liaison 6 sensiblement rectiligne, perpendiculaire aux plans des acreaux 2. Le raccord entre le brin de liaison 6 et les extrémités extérieures des premières branches 3 s'effectue au moyen de boucles 7, le brin 6, s'étendant ainsi à distance des premières branches 3 dans la direction opposée aux arceaux 2, assurant ainsi l'élasticité en flexion requise pour la portion active du ressort 1. De façon plus spécifique, dans l'exemple représenté, chaque arceau 2 présente deux parties d'extrémité 8 sensiblement symétriques, droites, convergeant l'une vers l'autre à partir de la portion d'arc centrale 9 de l'arceau.

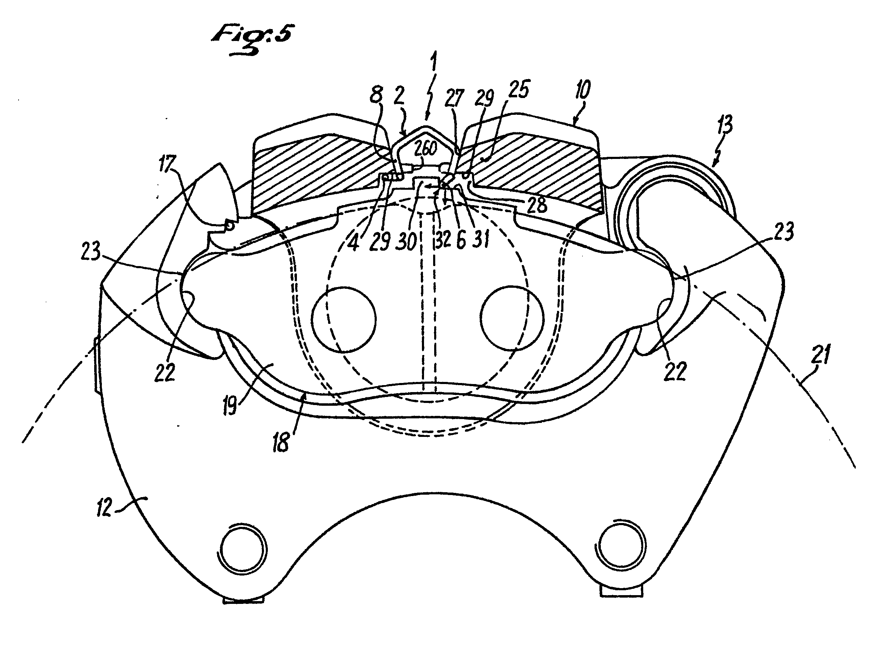

On a représenté sur les figures 4 et 5 un frein à disque du type «mono-colonnette» comportant un étrier 10 coulissant sur un support fixe 12 au moyen d'une colonnette axiale 13 fixée, dans l'exemple représenté, au support fixe 12 et reçue dans un fourreau tubulaire 14 solidaire de l'étrier 10. Le coulissement de l'étrier 10 par rapport au support fixe 12 est également assuré, à l'extrémité de l'étrier opposée à la colonnette 13, par des surfaces de coulissement axial 15 et 16 formées respectivement sur cette extrémité opposée de l'étrier et la partie adjacente du support fixe 12 et entre lesquelles est interposé un élément de verrouillage en fil métallique 17 selon un agencement faisant l'objet de la demande de Brevet Européen 0 036 368 dont le contenu est supposé intégré ici pour référence. Le frein comporte deux patins de friction 18, comprenant une plaque support 19 et une garniture de friction 20, susceptibles de venir en engagement de friction avec un disque tournant 21 lors de l'actionnement du moteur hydraulique de frein intégré dans l'étrier 10. Les plaques support 19 des patins de friction 18 sont reçues en ancrage et en coulissement par des pattes d'extrémité profilées 22 dans des ouvertures correspondantes 23 formées dans le support fixe 12 selon un agencement décrit dans la demande de Brevet Européen 0 002 399, c'est-à-dire dans un agencement où il est souhaitable d'exercer sur les patins de friction un effort tangentiel qui maintienne ces derniers dans une position latérale préférentielle en appui contre le support fixe 12.

L'étrier 10 comporte une partie de voile 25 surplombant le disque et les zones médianes desdits patins 18 et pourvue d'une ouverture traversante définie par des bords latéraux 27 parallèles à l'axe du disque 21 convergeant dans la direction vers l'axe du disque 21 pour former un passage sensiblement rectangulaire de dimensions réduites 26 dont les extrémités opposées, dans la direction de l'axe du disque, sont prolongées par des lumières rectangulaires 260. Dans la face intérieure de la voûte 25 est formé un évidement 28 d'allure sensiblement rectangulaire débordant latéralement, dans la direction circonférentielle de rotation du disque, du passage de dimensions réduites 26 et dans lequel sont inscrites les lumières 260 de façon à définir ainsi latéralement, de part et d'autre de chacune de ces lumières, une surface d'appui en retrait 29. Comme on le voit mieux sur la figure 5, la plaque support 19 de chaque patin 18 comprend centralement un têton 30 faisant saillie vers l'extérieur par rapport au bord supérieur 31 de la zone médiane adjacente de la plaque support, de façon à définir un angle d'appui 32 destiné à recevoir le brin 6 comme il sera maintenant expliqué en détail.

Pour sa mise en place dans la voûte 25 de l'étrier 10, le ressort 1 est introduit par le haut dans l'ouverture de la voûte en forçant les premières et secondes pattes 3 et 4 élastiquement l'une vers l'autre par déformation élastique de la partie d'arc central 9 des arceaux 2 afin de permettre le passage ce ces pattes dans les lumières d'extrémité 260 jusqu'à ce qu'elles franchissent l'angle entre ces lumières et les faces d'appui en retrait 29 de l'évidement 28, les pattes étant alors autorisées à s'écarter l'une de l'autre pour tendre à recouvrer leur position initiale dans l'espace, cet écartement étant limité par la venue en contact des génératrices latérales des parties d'extrémité 8 des arceaux 2 contre les faces en regard 27 de l'ouverture dans la voûte, les première et seconde pattes 3 et 4 étant corrélativement maintenues plaquées contre les surfaces d'appui intérieur 29 de l'évidement 28. Lors du basculement de l'étrier 10 vers sa position normale de fonctionnement verrouillée par rapport au support fixe 12, l'ensemble d'application de force du ressort 1, constitué par le brin de liaison 6 et ses deux boucles de raccordement d'etrémité 7, qui occupait jusqu'à présent sa position naturelle représentée sur la figure 3, vient porter, par le brin de liaison 6, contre le bord supérieur 31 des plaques support de garniture 19. Du fait de l'inclinaison initiale de cet ensemble d'application de forces, ce dernier est amené, lors du rapprochement de l'étrier vers les bords supérieurs des patins de friction, à basculer en contact glissant contre le bord supérieur 31, dans le sens de la flèche F, autour de l'axe constitué par les premières branches 3, jusqu'à ce que le brin de liaison 6 vienne buter contre l'arête latérale de la partie en saillie centrale 30 de la plaque support de garniture 19 en se bloquant ainsi dans l'angle d'appui 32. Le complément de basculement de l'étrier 10 dans sa position normalement de fonctionnement verrouillée sur le support fixe 12 se traduit ensuite par un légér écrasement de l'ensemble d'application de force du ressort dont la flexion est autorisée par les boucles de raccordement d'extrémité 7. Dans la position de fonctionnement ainsi atteinte illustrée dans la figure 5, le brin de liaison 6 exerce donc sur les patins de friction une force de sollicitation incluant une composante radiale et une composante tangentielle, comme figuré par les petites flèches sur cette figure 5. Du fait de la composante de sollicitation radiale, l'étrier 10 se trouve lui-même, par réaction, sollicité élastiquement vers l'extérieur, ce qui assure ainsi le maintien en contact des surfaces de coulissement axial de l'étrier et du support fixe 12. On notera que, dans la position de fonctionnement normale, les zones sous contrainte du ressort 1 sont disposées à l'écart de la source de rayonnement de chaleur constituée par le disque 21, que l'ensemble du ressort 1 se trouve correctement ventilé et n'occulte que de façon extrêmement limitée la zone d'inspection des patins.

On a représenté sur la figure 6 un autre type de frein équipé d'un ressort 1 selon la présente invention identique, pour sa part, à celui décrit précédemment en relation avec les figures 1 à 5. Les configurations des patins de friction 18 et de la voûte d'étrier 25 sont également identiques à celles décrites précédemment.

Le frein de la figure 6, du type décrit dans la demande de Brevet Européen 0 002 399, se distingue du frein des figures 4 et 5 en ce sens que l'étrier 10 est ici monté coulissant par rapport au support fixe 12 au moyen de deux paires de surfaces de coulissement complémentaires 40, 41 et 42, 43 formées respectivement sur le support fixe 12 et sur l'étrier 10, des clavettes de coulissement 50 et 51 étant interposées entre lesdites surfaces de coulissement 40, 41 et 42, 43, respectivement. Le ressort 1 assure ainsi le maintien en contact des surfaces de coulissement axiales de l'étrier et du support fixe et exerce, sur les patins de friction, la double sollicitation mentionnée plus haut. On constate ainsi que, grâce à l'utilisation du ressort 1, on peut supprimer les deux ressorts d'étrier et les deux ressorts de patins de friction habituellement utilisés dans ce type de frein.

Quoique la présente invention ait été décrite en relation avec des modes de réalisation particuliers, elle ne s'en trouve pas limitée. En particulier, le ressort selon l'invention trouve également son application dans les modèles de frein où les plaques de friction coopèrent avec des bords latéraux de la partie de voûte de l'étrier au moyen de goujons de coulissement. La forme des arceaux 2 peut en outre être adaptée à certaines configurations particulières d'ouvertures traversantes de voûtes d'étrier.

**Revendications**

1. Ressort pour frein à disque du type comportant un étrier (10) monté coulissant sur un support fixe (12) et comprenant une partie de voûte (25) présentant, à l'aplomb des deux patins de friction (18) du frein, une ouverture traversante (26), le ressort (1) étant destiné à être interposé entre la partie de voûte (25) de l'étrier et les patins de friction (18) pour exercer sur ces derniers au moins un effort radial dirigé sensiblement vers l'axe du disque (21) et comprenant une partie centrale (2), agencée pour être reçue dans l'ouverture de la partie de voûte, prolongée par des parties latérales (3, 4) susceptibles de coopérer avec la face intérieure (29) de la voûte pour le montage élastique sur l'étrier, et une partie d'appui (6, 7) coopérant, en position de fonctionnement du frein, avec les bords supérieurs adjacents des patins de friction (18), caractérisé en ce que le ressort (1) est conformé pour présenter deux arceaux parallèles (2), sensiblement en forme de C, constituant ladite partie centrale, les zones d'extrémité (8) de chaque arceau (2) se prolongeant respectivement par des première (3) et seconde (4) pattes repliées angulairement dans une même direction par rapport au plan de l'arceau, les pattes (3, 4) des deux arceaux s'étendant dans des directions opposées et constituant lesdites parties latérales, les premières pattes (3) des arceaux (2) étant reliées l'une à l'autre par un brin de liaison (6) s'étendant perpendiculairement au plan des arceaux et constituant ladite partie d'appui.

2. Ressort selon la revendication 1, caractérisé en ce qu'il est réalisé à partir d'un fil d'acier.

3. Ressort selon la revendication 1 ou la revendication 2, caractérisé en ce que le brin de liaison (6) est relié à l'extrémité extérieure de chaque première patte (3) par une boucle (7).

4. Ressort selon la revendication 3, caractérisé en ce que le brin de liaison (6) est normalement décalé vers les secondes pattes (4) par rapport au premières pattes (3).

5. Ressort selon l'une des revendications précédentes, caractérisé en ce que les premières pattes (3) et le brin de liaison (6) sont sensiblement coplanaires.

6. Ressort selon l'une des revendications précédentes, caractérisé en ce que le brin de liaison (6) est rectiligne.

7. Ressort selon l'une des revendications précédentes, caractérisé en ce que les extensions vers l'extérieur des première (3) et seconde (4) pattes sont sensiblement identiques (8).

8. Ressort selon l'une des revendications précédentes, caractérisé en ce que chaque arceau (2) présente deux zones d'extrémité (8) droites sensiblement symétriques, et convergeant l'une vers l'autre à partir d'une portion d'arc centrale (9).

9. Ressort selon l'une des revendications précédentes, caractérisé en ce que les secondes pattes (4) s'écartent angulairement des premières pattes (3).

10. Frein à disque, du type comportant un étrier (10) monté coulissant sur un support fixe (12) et comprenant une partie de voûte (25) présentant à l'aplomb des deux patins de friction (18) du frein une ouverture traversante (26), et agencé pour être équipé d'un ressort (1) selon l'une des revendications 1 à 9, caractérisé en ce que l'ouverture de la voûte présente, en vue du dessus, un passage de dimension réduites (26) à profil rectangulaire avec deux lumières d'extrémités opposées (260), pour le passage des premières (3) et secondes (4) pattes des deux arceaux (2), délimitant intérieurement des surfaces d'appui latérales (29) formées dans la face intérieure de la voûte (25) de l'étrier.

11. Frein à disque selon la revendication 10, caractérisé en ce que les surfaces d'appui (29) sont formées dans un évidement (28) en retrait de la voûte (25).

12. Frein à disque selon l'une des revendications 10 et 11, caractérisé en ce que les patins de friction (18) comprennent une saillie centrale (30) formant latéralement un angle d'appui (32) pour le brin de liaison (6) du ressort (1).

13. Frein à disque selon la revendication 12, caractérisé en ce que l'étrier (10) est monté coulissant axialement sur le support fixe (12) au moyen d'une colonnette axiale unique (13) et de deux surfaces de coulissement axial (15, 16) formées respectivement sur la partie de l'étrier (10) opposée à la colonnette (13) et sur la partie adjacente du support fixe (12).

**Patentansprüche**

1. Feder für eine Scheibenbremse mit einem Bremssattel (10), der auf einem festen Bremsträger (12) gleitbar gelagert ist und einen Stegabschnitt (25) aufweist, der an der Stelle der beiden Bremsbacken (18) eine quer verlaufende Öffnung (26) besitzt, wobei die Feder (1) zwischen den Stegabschnitt (25) des Bremssattels und die Bremsbacken (18) einsetzbar ist, um auf die letzteren mindestens eine zur Achse der Bremsscheibe (21) hin gerichtete Radialkraft auszuüben, und die Feder versehen ist mit einem zentralen Abschnitt (2), der in der Öffnung des Stegabschnitts aufnehmbar ist und von seitlichen Abschnitten (3, 4) verlängert wird, die mit der Innenfläche (29) des Steges zur elastischen Halterung am Bremssattel zusammenwirken, sowie einem Anlegeabschnitt (6, 7), der in der Betriebsstellung der Bremse mit den oberen benachbarten Rändern der Bremsbacken (18) zusammenwirkt, dadurch gekennzeichnet, dass die Feder (1) so ausgebildet ist, dass sie zwei im wesentlichen C-förmige, parallele Bögen (2) besitzt, die den besagten zentralen Abschnitt bilden, wobei die Endbereiche (8) jedes Bogens (2) durch einen ersten (3) bzw. zweiten (4) Schenkel verlängert sind, die winkelmässig in der gleichen Richtung bezüglich der Ebene des Bogens umgebogen sind, wobei die Schenkel (3, 4) der beiden Bogen sich in entgegengesetzte Richtungen erstrecken und die besagten seitlichen Abschnitte bilden, wobei die ersten Schenkel (3) der Bogen (2) durch einen Verbindungsabschnitt (6) untereinander verbunden sind, der sich senkrecht zur Ebene der Bogen erstreckt und den besagten Anlegeabschnitt bildet.

2. Feder nach Anspruch 1, dadurch gekennzeichnet, dass sie aus einem Strahldraht hergestellt ist.

3. Feder nach Anspruch 1 oder 2, dadurch gekennzeichnet, dass der Verbindungsabschnitt (6) mit dem äusseren Ende jedes ersten Schenkels (3) durch eine Schleife (7) verbunden ist.

4. Feder nach Anspruch 3, dadurch gekennzeichnet, dass der Verbindungsabschnitt (6) normalerweise in Richtung auf die zweiten Schenkel (14) bezüglich der ersten Schenkel (3) versetzt ist.

5. Feder nach einem der vorhergehenden Ansprüche, dadurch gekennzeichnet, dass die ersten Schenkel (3) und der Verbindungsabschnitt (6) im wesentlichen koplanar sind.

6. Feder nach einem der vorhergehenden Ansprüche, dadurch gekennzeichnet, dass der Verbindungsabschnitt (6) geradlinig ausgebildet ist.

7. Feder nach einem der vorhergehenden Ansprüche, dadurch gekennzeichnet, dass die äusseren Endabschnitte der ersten (3) und zweiten (4) Schenkel im wesentlichen identisch ausgebildet sind. (8).

8. Feder nach einem der vorhergehenden Ansprüche, dadurch gekennzeichnet, dass jeder Bogen (2) zwei im wesentlichen symmetrische, geradlinige Endbereiche (8) aufweist, die ausgehend von einem zentralen Abschnitt (9) des Bogens aufeinander zu konvergieren.

9. Feder nach einem der vorhergehenden Ansprüche, dadurch gekennzeichnet, dass die zweiten Schenkel (4) sich unter einem Winkel von den ersten Schenkeln (3) wegerstrecken.

10. Scheibenbremse mit einem Bremssattel (10), der an einem festen Bremsträger (12) gleitbar gelagert ist und einen Stegabschnitt (25) aufweist, der an der Stelle der beiden Bremsbacken (18) eine quer verlaufende Öffnung (26) besitzt, und mit einer Feder (1) nach einem der Ansprüche 1 bis 9 bestückbar ist, dadurch gekennzeichnet, dass die Öffnung des Steges, von oben gesehen, versehen ist mit einem Durchgang verringerter Abmessungen (26) von rechteckigem Profil mit zwei Schlitzen (260) an den entgegengesetzten Enden für den Durchtritt der ersten (3) und zweiten (4) Schenkel der beiden Bogen (2), die innen seitliche Anlageflächen (29) begrenzen, die in der Innenfläche des Steges (25) des Bremssattels gebildet sind.

11. Scheibenbremse nach Anspruch 10, dadurch gekennzeichnet, dass die Anlageflächen (29) in einer rückspringenden Ausnehmung (28) des Steges (25) gebildet sind.

12. Scheibenbremse nach Anspruch 10 oder 11, dadurch gekennzeichnet, dass die Bremsbacken (18) einen zentralen Vorsprung (30) aufweisen, der seitlich einen Anlagewinkel (32) für den Verbindungsabschnitt (6) der Feder (1) bildet.

13. Scheibenbremse nach Anspruch 12, dadurch gekennzeichnet, dass der Bremssattel (10) axial gleitend gelagert ist am Bremsträger (12) mittels eines einzigen axialen Bolzens (13) und zweier axialer Gleitflächen (15, 16), die an dem dem Bolzen (13) gegenüberliegenden Abschnitt des Bremssattels (10) bzw. dem angrenzenden Abschnitt des Bremsträgers (12) gebildet sind.

## Claims

1. A spring for a disc brake of the type comprising a caliper (10) slidingly mounted on a fixed support (12) and comprising a bridge portion (25) presenting adjacent the two friction shoes (18) of the brake a traverse opening (26), the spring (1) being adapted to be interposed between the bridge portion (25) of the caliper and the friction shoes (18) to exert upon the latter at least a radial force directed substantially towards the axis of the disc (21) and comprising a central portion (2) adapted to be received in the opening of the bridge portion and being prolongated by lateral portions (3, 4) adapted to cooperate with the interior face (29) of the bridge for resilient mounting on the caliper, and an engagement portion (6, 7) cooperating with the adjacent upper edges of the friction shoes (18) when the brake is in its operative position, characterized in that the spring (1) is formed to present two substantially C-shaped parallel arcs (2) constituting said central portion, the end areas (8) of each arc (2) being prolongated, respectively, by first (3) and second (4) legs angularly rebent in a same direction with respect to the plane of the arc, the legs (3, 4) of the two arcs extending in opposite directions and constituting said lateral portions, the first legs (3) of the arc (2) being connected to each other by a connecting portion (6) extending perpendicularly to the plane of the arcs and constituting said engagement portion.

2. The spring of claim 1, characterized in that it is made from a steel wire.

3. The spring of claim 1 or claim 2, characterized in that the connecting portion (6) is connected to the outer end of each first leg (3) by a loop (7).

4. The spring of claim 3, characterized in that the connecting portion (6) is normally offset towards the second legs (4) with respect to the first legs (3).

5. The spring of any of the predecing claims, characterized in that the first legs (3) and the connecting portion (6) are substantially coplanar.

6. The spring of any of the predecing claims, characterized in that the connecting portion (6) is straight.

7. The spring of any of the predecing claims, characterized in that the extensions towards the exterior of the first (3) and second (4) legs are substantially identical (8).

8. The spring of any of the predecing claims, characterized in that each arc (2) presents two substantially symmetrical straight end areas (8) which converge towards each other from a central portion (9) of the arc.

9. The spring of any of the predecing claims, characterized in that the second legs (4) are angularly spaced from the first legs (3).

10. A disc brake of the type comprising a caliper (10) slidingly mounted on a fixed support (12) and comprising a bridge portion (25) presenting adjacent the two friction shoes (18) of the brake a transverse opening (26) and adapted to be equipped with a spring (1) according to any of claims 1 to 9, characterized in that the opening of the bridge presents, as seen from above, a passage of reduced dimensions (26) having a rectangular profile with two slots at opposite ends (260) for the passage of first (3) and second (4) legs of two arcs (2) delimiting at the inside lateral engagement surfaces (29) formed in the interior face of the bridge (25) of the caliper.

11. The disc brake of claim 10, characterized in that the engagement surfaces (29) are formed in an undercut recess (28) of the bridge (25).

12. The disc brake of any of claims 10 and 11, characterized in that the friction shoes (18) comprise a central projection (30) forming laterally an angle (32) of engagement for the connecting portion (6) of the spring (1).

13. The disc brake of claim 12, characterized in that the caliper (10) is axially slidingly mounted on the fixed support (12) by means of a single axial column (13) and two axial slide surfaces (15, 16) formed respectively on the portion of the caliper (10) opposite to the column (13) and on the adjacent portion of the fixed support (12).

*Fig.1*

*Fig.2*

*Fig.3*

*Fig: 4*

*Fig: 6*

Fig:5

0 100 273